# EUROPÄISCHE PATENTSCHRIFT

(11) **EP 2 986 893 B1**
(45) Veröffentlichungstag und Bekanntmachung des Hinweises auf die Patenterteilung: **07.06.2017**
(21) Anmeldenummer: 14723306.8
(22) Anmeldetag: 25.03.2014
(51) Int. Cl.: F21S 8/06, F21V 8/00, F21V 23/02, F21S 4/28, F21Y 115/10, F21Y 103/10, F21V 11/02, F21V 3/04

(54) **LEUCHTE**
LUMINAIRE
DISPOSITIF D'ÉCLAIRAGE

(30) Priorität: 28.03.2013 AT 1022013 U
(43) Veröffentlichungstag der Anmeldung: 24.02.2016
(73) Patentinhaber: Zumtobel Lighting GmbH, 6850 Dornbirn (AT)
(72) Erfinder: GASSNER, Patrik, A-6722 St. Gerold (AT); MARTIN, Kenneth, A-6923 Lauterach (AT)
(74) Vertreter: Zumtobel Group IP Management
(86) Internationale Anmeldenummer: PCT/AT2014/000052
(87) Internationale Veröffentlichungsnummer: WO 2014/153578

(56) Entgegenhaltungen:
- EP-A2- 2 341 278
- WO-A1-2012/124637
- WO-A1-2012/144393
- WO-A1-2013/008221
- DE-U1-202011 051 669
- US-A1- 2011 134 361
- US-A1- 2012 169 235

## Beschreibung

Die Erfindung betrifft eine Leuchte nach dem Oberbegriff der Anspruchs 1. Derartige Leuchten sind bekannt und weisen ein mit einer lichtdurchlässigen Abdeckung verschlossenes Gehäuse zur Aufnahme einer Lichtquelle sowie von Betriebsgeräten auf. In der Beleuchtungstechnik setzt sich immer mehr die Verwendung von Leuchtdioden als Lichtquelle durch. Die Lichtquelle besteht daher in der Regel aus einer Vielzahl von Leuchtdioden, die auf wenigstens einer Leiterplatte geordnet sind.

Bekanntlich sind Leuchtdioden als Elelctronikbauteile recht klein bauend. Demgegenüber ist der Platzbedarf der für den Betrieb der Leuchtdioden benötigten Betriebsgeräte, also insbesondere der elektrischen Treiberschaltungen und der Steuergeräte, relativ groß. WO2012/144393 zeigt eine Leuchte. Hier setzt die Erfindung an. Aufgabe der Erfindung ist es nämlich eine Leuchte zu schaffen, die möglichst klein dimensioniert werden kann. Diese Aufgabe wird gelöst durch eine Leuchte mit den Merkmalen des Anspruchs 1. Erfindungsgemäß ist vorgesehen, dass sich ausgehend von einer lichtdurchlässigen Abdeckung in Richtung der Leuchtdioden wenigstens ein Lichtleiter erstreckt, welcher das von den Leuchtdioden abgestrahlte Licht aufnimmt und zur Abdeckung hin leitet. Dadurch dass ein Lichtleiter vorgesehen ist, wird Raum für Betriebsgeräte geschaffen, um diese neben dem Lichtleiter anzuordnen. Hierdurch ist es möglich das in den Lichtleiter eingekoppelte Licht am Betriebsgerät vorbei in die Abdeckung einzuleiten, welche dann das Licht über eine der Einkoppelseite gegenüberliegenden Abstrahlfläche in die Umgebung der Leuchte abgestrahlt.

Vorteilhafte Ausgestaltungen der Erfindung sind in den Unteransprüchen beschrieben.

In einer ersten Ausführungsform ist die erfindungsgemäße Leuchte im wesentlichen langgestreckt und das Gehäuse weist zwei profilierte Seitenwände sowie zwei Stirnteile auf. Die Leuchtdioden sind in zwei parallel zueinander verlaufenden Reihen auf der Leiterplatte angeordnet, wobei jeweils einer Reihe von Leuchtdioden ein Lichtleiter zugeordnet ist.

In der erfindungsgemäßen Ausführungsform bilden Abdeckung und Lichtleiter im Querschnitt gesehen eine U-Form, wobei die Lichtleiter Seitenflanken und die Abdeckung den Quersteg der U-Form definieren. Um als Lichtleiter optimal fungieren zu können, sind die Seitenflanken aus glasklarem Material hergestellt. Insbesondere bevorzugt ist der Quersteg aus Material gefertigt, welches Licht diffus abstrahlt. Dies ist von Bedeutung, weil Schattenwurf sowie die Abbildung von hellen Lichtstreifen auf der zu beleuchtenden Fläche vermieden werden soll. Die Ursache für den Schattenwurf liegt einerseits darin, dass in der diskutierten Ausführungsform zwei Lichtleiter vorgesehen sind, aus denen Licht über die Abdeckung austritt und zum Teil auf die Aufhängelemente der Leuchte fallen. Andererseits ist eine Vielzahl von Leuchtdioden vorgesehen, die jede für sich eine kleine Lichtquelle bildet, welche wiederum die Aufhängeelemente aufgrund ihrer unterschiedlichen Positionen auf der Leiterplatte aus verschiedenen Richtungen anstrahlen. Dies führt zu Mehrfachschatten, die allgemein als störend oder unschön wahrgenommen werden.

Die Ursache für die Abbildung heller Lichtstreifen ist darin zu sehen, als dass die Lichtleiter in etwa senkrecht zur Abdeckung angeordnet sein können und dadurch ein Großteil des im Lichtleiter geführten Lichtes in einem sehr steilen Winkel auf die Austrittsfläche der Abdeckung auftrifft und daher beim Austritt aus der Abdeckung kaum abgelenkt wird. Ohne den gezielten Eingriff durch das Ausbilden einer diffus abstrahlenden Abstrahlfläche der Abdeckung resultiert aus dieser Anordnung, dass Lichtstreifen deutlich sichtbar abgebildet werden, was wiederum allgemein als störend oder unschön wahrgenommen würde. Weitere Verbesserung hinsichtlich der Verminderung des Schattenwurfs und der Verminderung der Abbildung von Lichtstreifen kann dadurch erzielt werden, dass der Quersteg der Abdeckung im Bereich der Seitenflanken gegenüber dem Quersteg geneigt ist. Insbesondere überragt in vorteilhafter Weise der Quersteg die Seitenflanken und bildet dabei Vorsprünge, die in besagter Weise geneigt sind.

Die Ansprüche 6-9 beschreiben verschiedene Weiterbildungen der Abdeckung, die geeignet sind eine diffuse Abstrahlung des Lichts zu gewährleisten. Dies kann unter anderem mittels einer kleinwinkelstreuenden Oberfläche, also einer Oberfläche die vorzugsweise aufgeraut oder wellig ausgebildet ist, erzielt werden. Alternativ kann die Materialeigenschaften, aus denen die Abdeckung gefertigt ist, so gewählt werden, dass Licht diffus abgestrahlt wird. Dies ist beispielweise mit Polymethylmethacrylat, dem ein Anteil von etwa 20% Diffusorperlmaterial beigemischt wird, realisierbar.

In erfindungsgemäßer Weise wird der von den Seitenflanken und vom Quersteg umschlossene Raum zur Aufnahme von Betriebsgeräten genützt. Hierdurch ist eine besonders klein bauende Ausführungsform der Erfindung realisierbar. Bevorzugt werden Abdeckung und Lichtleiter einstückig aus Kunststoff im Zweilcomponentenspritzgußverfahren hergestellt.

Eine besonders bevorzugte Ausführungsform der erfindungsgemäßen Leuchte ist in den Ansprüchen 11-18 beschrieben. Hierbei ist die Leuchte als Anbau- oder Pendelleuchte ausgeführt und weist zwei Lichtquellen auf, die aus einer Vielzahl von Leuchtdioden gebildet sind, deren Licht über zwei Abstrahlflächen in die Umgebung abgestrahlt werden. Hierbei sind die Lichtquellen auf einer gemeinsamen Leiterplatte angeordnet sind, wobei die Vielzahl der Leuchtdioden der erste Lichtquelle auf der Oberseite und die Vielzahl der Leuchtdioden der zweite Lichtquelle auf der Unterseite der Leiterplatte platziert sind. Vorzugsweise dient das Licht der ersten Lichtquelle der indirekten Beleuchtung und das Licht der zweiten Lichtquelle der direkten Beleuchtung dient. Hierbei ist unter indirekter Beleuchtung zu verstehen, dass Licht überwiegend zu einer Wand oder insbesondere zu einer Decke hin abgestrahlt wird und von dort erst durch Reflexion in den zu beleuchtenden Raum bzw. Bereich gelenkt wird. Unter direkter Beleuchtung ist zu verstehen, dass der zu beleuchtende Bereich, beispielsweise ein Arbeitsplatz, unmittelbar von der Leuchte aus angestrahlt wird. Vorteilhaft kann die erste Lichtquelle getrennt von der zweiten Lichtquelle geschaltet oder gedimmt werden kann, um damit die direkte bzw. indirekte Beleuchtung getrennt bedienbar zu machen. In einer erfindungsgemäßen Weiterbildung ist die zweite Lichtquelle durch wenigstens eine Reihe von mehreren hintereinander angeordneten Leuchtdioden gebildet, die mittig auf der Leiterplatte platziert sind, wobei die Leuchtdioden von einer Linsenoptik abgedeckt sind, welche das durch sie hindurch getretene Licht in eine Rasteroptilc abstrahlt. Zur weiteren Verbesserung der Effizienz kann die wenigstens eine Reihe von mehreren hintereinander angeordneten Leuchtdioden der zweiten Lichtquelle von einem Reflektor umgeben sein. Vorzugsweise ist die Rasteroptik als Aluminiumraster mit Seitenreflektoren und Querlamellen in der Art der EP2226551 der Anmelderin oder als Kunststoffzellenraster in der Art der DE 02010062454 der Anmelderin ausgeführt.

Es zeigen
- Fig. 1: eine perspektivische Ansicht einer erfindungsgemäßen Leuchte,
- Fig. 2: den Querschnitt durch eine erfindungsgemäße Leuchte nach Fig. 1,
- Fig. 3: eine alternative Ausführungsform einer Leuchte.

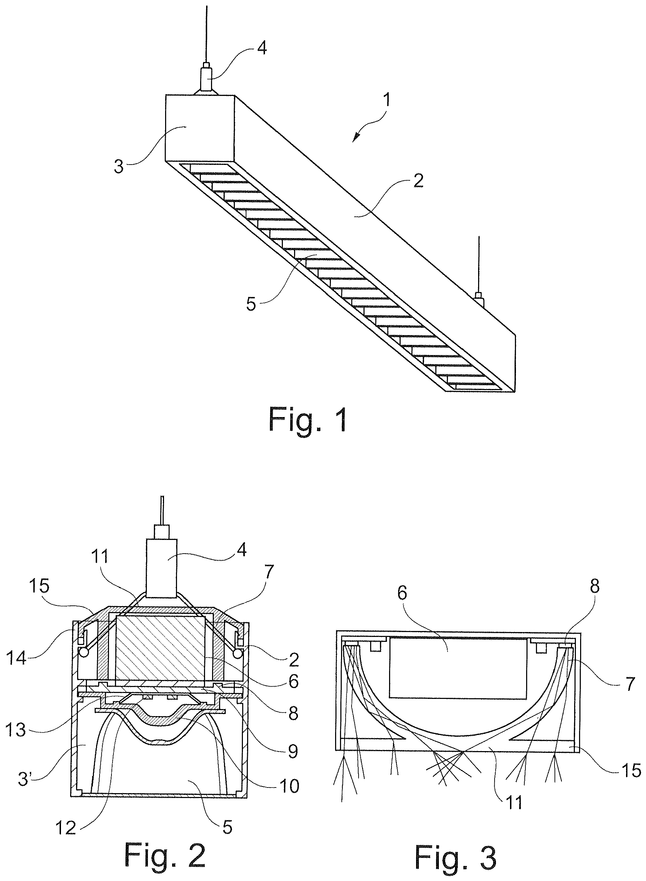

Die Figur 1 zeigt eine Leuchte (1), welche als Pendelleuchte ausgeführt ist. Die Leuchte (1) weist ein Gehäuse mit Seitenwänden (2) sowie Stirnteilen (3) auf. Licht wird über einen Raster (5), welcher als Kunststoffzellenraster ausgeführt ist, von der Leuchte (1) abgegeben. Die Leuchte (1) ist mit sogenannten Seilpendeln (4) an eine Decke (nicht dargestellt) montiert werden.

In Figur 2 ist eine erfindungsgemäße Leuchte (1) in der Ausführungsform nach Figur 1 dargestellt. Es ist erkennbar, dass neben der direkten Lichtabgabe über den Raster (5) auch Licht über die Abdeckung (11) zur einer (nicht dargestellten) Decke abgestrahlt wird. Hierzu sind auf einer Leiterplatte (9) Leuchtdioden (8) angeordnet, welche so angeordnet sind, dass sie ihr Licht in unmittelbar über ihnen angeordnete Lichtleiter (7) einstrahlen. Dieses Licht wird im Lichtleiter (7) zu einer Abdeckung (11) gleitet und von dort über eine Abstrahlfläche in die Umgebung abgegeben. Die Abdeckung (11) bildet zusammen mit den Lichtleitern (7) im Querschnitt gesehen eine U-Form aus einem Quersteg und Seitenflanken, wobei die Abdeckung (11) die Lichtleiter (7) seitlich überragt. Hierdurch sind Vorsprünge (15) gebildet, die gegenüber der Ebene in der die Abdeckung (11) liegt, abgewinkelt angeordnet sind. Diese Abwinkelung hat den vorteilhaften Effekt zur Folge, dass die Abstrahlung des Lichts aufgeweitet wird und somit ein größerer Bereich der (nicht dargestellten) Decke beleuchtet wird als dies der Fall wäre, wenn die Abwinkelung nicht vorhanden wäre. Die Abdeckung (11) sowie die Lichtleiter (7) bzw. der Quersteg, die Seitenflanken und die Vorsprünge (15) sind als Kunststoffprofil ausgebildet und formen so eine Baueinheit. Diese Baueinheit wird als Ganzes mit den Seitenwänden (2) des Leuchtengehäuses verbunden. Hierzu weist die Baueinheit am Ende der Vorsprünge (15) Schnappleisten (14) auf, die jeweils in zugeordnete erste Nuten der Seitenwände eingeschnappt sind.

Die Leiterplatte (9) ist beidseitig mit Leuchtdioden (8, 12) bestückt. Die Leuchtdioden (12), welche der Direktbeleuchtung dienen, sind von einem Linsenprofil (10) überdeckt, welche ebenso wie die Leiterplatte selbst in zweite Nuten, welche an den Seitenwänden angeformt sind, gehalten werden. Das von den Leuchtdioden (12) über das Linsenprofil (10) in den Zellenraster (5) abgestrahlte Licht wird von diesem Raster so umgelenkt, dass die Leuchte (1) entblendet ist und die einschlägigen Normen für Arbeitsplatzbeleuchtung erfüllt. Zur Verbesserung der Effizienz ist seitlich neben den Leuchtdioden (12) ein Reflektor angeordnet, welcher dafür sorgt, dass möglichst ein Großteil des Lichts der Leuchtdioden (12) in Richtung des hinsenprofils (10) abgestrahlt wird.

Figur 3 zeigt eine alternative Ausführungsform einer Leuchte, welche besonders klein bauend ist. In einem Leuchtengehäuse ist eine Leiterplatte mit Leuchtdioden (8) angeordnet, deren Licht wiederum in einen Lichtleiter (7) eingekoppelt wird. Dieser Lichtleiter (7) unterscheidet sich aber von der flankenartigen Ausführungsform der Lichtleiter wie sie in den Figuren 1 und 2 beschrieben ist, denn der Lichtleiter (7) weist nun eine Bogenform auf. Hierbei überspannt der vom Lichtleiter (7) gebildete Bogen die Leiterplatte. Im Bogen überspannten Raum ist ein Betriebsgerät (6) angeordnet.

Das Licht der Leuchtdioden (8), welche in zwei Reihen auf beiden Seitenrandbereichen der Leiterplatte angeordnet sind wird zur Abdeckung (11) geleitet und von dort über eine Abstrahlfläche in die Umgebung abgestrahlt. Hierbei ist es möglich, dass ein kleiner Teil des Lichtes frühzeitig aus dem Lichtleiter (7) austritt. Dies ist jedoch unproblematisch, weil auch dieses Licht im wesentlichen zur Abdeckung (11) hin gelenkt ist und in der Folge durch die Abdeckung (11) hindurch tritt und ebenfalls über die Abstrahlfläche in die Umgebung abgestrahlt wird.

## Patentansprüche

1. Leuchte (1) aufweisend ein mit einer lichtdurchlässigen Abdeckung (11) verschlossenes Gehäuse (2, 3) in welchem eine Lichtquelle (8, 12) sowie Betriebsgeräte (6) bereitgestellt sind, wobei die Lichtquelle (8, 12) aus einer Vielzahl von Leuchtdioden (8, 12) gebildet ist, die auf wenigstens einer Leiterplatte (9) geordnet sind,
wobei sich ausgehend von der Abdeckung (11) in Richtung der Leuchtdioden (8, 12) wenigstens ein Lichtleiter (7) erstreckt, welcher das von den Leuchtdioden (8, 12) abgestrahlte Licht aufnimmt und zur Abdeckung (11) hin leitet,
wobei die Abdeckung (11) und Lichtleiter (7) im Querschnitt gesehen eine U-form bilden, wobei die Lichtleiter Seitenflanken (7) und die Abdeckung (11) einen Quersteg definieren,
**dadurch gekennzeichnet,**
**dass** der von den Seitenflanken (7) und vom Quersteg umschlossene Raum der Aufnahme von der ßetriebsgeräte (6) dient.

2. Leuchte (1) nach Anspruch 1,
**dadurch gekennzeichnet,**
**dass** der wenigstens eine Lichtleiter (7) das in ihn eingekoppelte Licht in die Abdeckung (11) einleitet, welche das Licht über eine der Einkoppelseite gegenüberliegenden Abstrahlfläche in die Umgebung abgestrahlt.

3. Leuchte (1) nach Anspruch 1, oder 2,
**dadurch gekennzeichnet,**
**dass** die Leuchte (1) im wesentlichen langgestreckt ist,
**dass** das Gehäuse (2, 3) zwei profilierte Seitenwände (2) sowie zwei Stirnteile (3) aufweist,
**dass** die Leuchtdioden (8, 12) in zwei parallel zueinander verlaufenden Reihen auf der Leiterplatte (9) angeordnet sind,
**dass** zwei Lichtleiter (7) vorgesehen sind, welche jeweils einer Reihe von Leuchtdioden (8, 12) zugeordnet sind.

4. Leuchte (1) nach Anspruch 1, 2 oder 3,
**dadurch gekennzeichnet,**
**dass** die Seitenflanken (7) aus glasklarem Material und der Quersteg aus Material hergestellt ist, welches Licht aufgrund seiner Eigenschaften oder Oberflächenstruktur diffus abstrahlt.

5. Leuchte nach Anspruch 4,
**dadurch gekennzeichnet,**
**dass** Abdeckung und Lichtleiter (7) einstückig aus Kunststoff im Zweikomponentenspritzgußverfahren hergestellt sind.

6. Leuchte (1) nach einem der vorigen Ansprüche,
**dadurch gekennzeichnet,**
**dass** die Abdeckung (11) hinsichtlich ihrer lichttechnischer Wirksamkeit derart ausgebildet ist, dass diese Licht in diffuser Weise abstrahlt.

7. Leuchte (1) nach Anspruch 6,
**dadurch gekennzeichnet,**
**dass** die Abdeckung (11) aus klarem Polymethylmethacrylat gefertigt ist, welches eine Mengenanteil Diffusorperlmaterial enthält.

8. Leuchte (1) nach Anspruch 7,
**dadurch gekennzeichnet**,
das der Mengenanteil des Diffusorperlmaterials etwa 20% beträgt.

9. Leuchte (1) nach Anspruch 6,
**dadurch gekennzeichnet,**
**dass** die Abdeckung (11) auf der Abstrahlfläche optisch wirksame Störstellen aufweist, welche durch Lasergravur, durch Druckverfahren oder durch mechanische Bearbeitung aufgebracht sind.

10. Leuchte (1) nach einem der vorigen Ansprüche 4 bis 9,
**dadurch gekennzeichnet,**
**dass** der Quersteg der Abdeckung beide Seitenflanken (7) überragt und dass die dabei gebildeten Vorsprünge (15) gegenüber dem Quersteg geneigt sind.

11. Leuchte (1) nach einem der vorigen Ansprüche,
**dadurch gekennzeichnet,**
**dass** die Leuchte (1) wenigstens zwei Lichtquellen aufweist, die aus einer Vielzahl von Leuchtdioden (8,12) gebildet sind, deren Licht über zwei Abstrahlflächen in die Umgebung abgestrahlt werden.

12. Leuchte (1) nach Anspruch 11,
**dadurch gekennzeichnet,**
**dass** die Lichtquellen (8,12) auf einer gemeinsamen Leiterplatte (9) angeordnet sind, wobei die Vielzahl der Leuchtdioden (8,12) der erste Lichtquelle auf der Oberseite und die Vielzahl der Leuchtdioden (8,12) der zweite Lichtquelle auf der Unterseite der Leiterplatte (9) platziert sind.

13. Leuchte (1) nach Anspruch 11 oder 12,
**dadurch gekennzeichnet,**
**dass** die erste Lichtquelle (8,12) ihr Licht in die Lichtleiter der Abdeckung (11) einstrahlt.

14. Leuchte (1) nach Anspruch 11,12, oder 13,
**dadurch gekennzeichnet,**
**dass** die zweite Lichtquelle (8,12) durch wenigstens eine Reihe von mehreren hintereinander angeordneten Leuchtdioden (8,12) gebildet ist, die mittig auf der Leiterplatte (9) platziert sind,
und **dass** die Leuchtdioden (8,12) von einer Linsenoptik abgedeckt sind, welche das durch sie hindurch getretene Licht in eine Rasteroptik (5) abstrahlt.

15. Leuchte (1) nach Anspruch 14,
**dadurch gekennzeichnet,**
**dass** die wenigstens eine Reihe von mehreren hintereinander angeordneten Leuchtdioden (8,12) der zweiten Lichtquelle von einem Reflektor umgeben sind, welcher ihr Licht zur Linsenoptik lenkt.

16. Leuchte (1) nach einem der Ansprüche 11 bis 15,
**dadurch gekennzeichnet,**
**dass** die Rasteroptik (5) als Aluminiumraster mit Seitenreflektoren und Querlamellen oder als Kunststoffzellenraster ausgeführt ist.

17. Leuchte (1) nach einem der Ansprüche 11 bis 15,
**dadurch gekennzeichnet,**
**dass** die Leuchte (1) als Anbau- oder Pendelleuchte ausgeführt ist,
wobei das Licht der ersten Lichtquelle (8,12) der indirekten Beleuchtung und das Licht der zweiten Lichtquelle (8, 12) der direkten Beleuchtung dient.

18. Leuchte (1) nach Anspruch 17,
**dadurch gekennzeichnet,**
**dass** die erste Lichtquelle (8, 12) getrennt von der zweiten Lichtquelle (8,12) geschaltet oder gedimmt werden kann.

## Claims

1. Luminaire (1) comprising a closed housing (2, 3) with a translucent cover (11) in which a light source (8, 12) as well as operating devices (6) are arranged, wherein the light source (8, 12) comprises a plurality of light emitting diodes (8, 12), which are arranged on at least one printed circuit board (9),
wherein at least one light guide (7) extends from the cover (11) in the direction of the light emitting diodes (8, 12) and picks up the light emitted by the light emitting diodes (8, 12) and guides it to the cover (11),
wherein the cover (11) and light guide (7) form a U-shape in cross-section, wherein the side walls of the light guide (7) and the cover (11) define a transverse web,
**characterized in that**
the space of the receptacle enclosed by the side walls (7) and the transverse web serves to accommodate the operating devices (6).

2. Luminaire (1) according to claim 1,
**characterized in that**
the at least one light guide (7) guides the light coupled into it into the cover (11), which emzs the light into the environment via a emission surface opposite the coupling side.

3. Luminaire (1) according to claim 1, or 2,
**characterized in that,**
- the luminaire (1) is substantially elongated,
- the housing (2, 3) has two profiled side walls (2) as well as two end parts (3),
- the light emitting diodes (8, 12) are arranged in two rows running parallel to one another on the printed circuit board (9),
- two light guides (7) are provided, each of which is assigned to a row of light emitting diodes (8, 12).

4. Luminaire (1) according to claim 1, 2 or 3,
**characterized in that**
the side walls (7) are made of transparent material while the transverse web is made of material which emits diffuse light due to its properties or surface structure.

5. Luminaire (1) according to claim 4,
**characterized in that**
the cover (11) and the light guide (7) are produced in one piece from plastic in the two-component injection-molding process.

6. Luminaire (1) according to one of the preceding claims, **characterized in that**
the cover (11) is so designed that it emits light in a diffuse manner.

7. Luminaire (1) according to claim 6,
**characterized in that**
the cover (11) is made of clears polymethyl methacrylate, which contains a proportion of pearled diffuser material

8. Luminaire (1) according to claim 7,
**characterized in that**
the quantity proportion of the pearled diffuser material is about 20%.

9. Luminaire (1) according to claim 6,
**characterized in that**
the cover (11) has optically effective discontinuities on the emission surface that are applied by laser engraving, by printing processes or by mechanical processing.

10. Luminaire (1) according to claim 4,
**characterized in that**
the transverse web of the cover protrudes above both side walls (7) and the projections (15) formed thereby are inclined towards the transverse web.

11. Luminaire (1) according to one of the preceding claims,
**characterized in that**
the luminaire (1) has at least two light sources, which are formed by a plurality of light-emitting diodes (8, 12), the light of which is emitted into the environment via two emission surfaces.

12. Luminaire (1) according to claim 11,
**characterized in that**
the light sources (8, 12) are arranged on a common printed circuit board (9), wherein the plurality of light emitting diodes (8,12) of the first light source are arranged on the upper side while the plurality of light emitting diodes (8, 12) of the second light source are arranged on the underside of the circuit board (9).

13. Luminaire (1) according to claim 11 or 12,
**characterized in that**
the first light source (8, 12) emits its light into the light guides of the cover (11).

14. Luminaire according to claim 11, 12 or 13,
**characterized in that**
the second light source (8, 12) is formed by at least one row of a plurality of light emitting diodes (8, 12) arranged one behind the other, and placed centrally on the circuit board (9), while the light emitting diodes (8, 12) are covered by a lens optics which emits the light transmitted through them into a louvre optics (5).

15. Luminaire according to claim 14,
**characterized in that**
the at least one row of a plurality of light-emitting diodes (8, 12) arranged one behind the other of the second light source, are surrounded by a reflector which directs their light to the lens optics.

16. Luminaire (1) according to one of the claims 11 to 15,
**characterized in that**
the louvre optics (5) is designed as an aluminum louvre with lateral deflectors and transverse lamellae or as a plastic cell louvre.

17. Luminaire (1) according to one of the claims 11 to 15,
**characterized in that**
the luminaire (1) is designed as a surface moounted or pendant lamp, wherein the light of the first light source (8, 12) is for indirect lighting and the light from the second light source (8, 12) is for direct lighting.

18. Luminaire according to claim 17,
**characterized in that**
the first light source (8, 12) may be switched or dimmed separately from the second light source (8, 12).

## Revendications

1. Lampe (1),
présentant un boîtier (2, 3), fermé avec un recouvrement (11) transparent, dans lequel sont fournis une source de lumière (8, 12) ainsi que des appareils de commande (6), la source de lumière (8, 12) étant formée d'une multiplicité de diodes électroluminescentes (8, 12) qui sont disposées sur au moins un circuit imprimé (9),
au moins un conducteur optique (7) s'étendant à partir du recouvrement (11) en direction des diodes électroluminescentes (8, 12) et recevant la lumière rayonnée par les diodes électroluminescentes (8, 12) et la conduisant vers le recouvrement (11),
le recouvrement (11) et les conducteurs optiques (7) formant un U vu en coupe transversale, les conducteurs optiques définissant des flancs latéraux (7), et le recouvrement (11) définissant une barrette transversale,
**caractérisée en ce que**
l'espace englobé par les flancs latéraux (7) et par la barrette transversale sert à la réception des appareils de commande (6).

2. Lampe (1) selon la revendication 1,
**caractérisée en ce que**
le conducteur optique (7) au moins au nombre de un introduit dans le recouvrement (11) la lumière qui lui est injectée, lequel recouvrement rayonne dans l'environnement la lumière par le biais d'une surface de rayonnement opposée au côté d'injection.

3. Lampe (1) selon la revendication 1 ou 2,
**caractérisée en ce que**
la lampe (1) est essentiellement allongée,
le boîtier (2, 3) présente deux parois latérales (2) profilées ainsi que deux parties frontales (3),
les diodes électroluminescentes (8, 12) sont disposées en deux rangées parallèles entre elles sur le circuit imprimé (9),
deux conducteurs optiques (7) sont prévus, lesquels sont affectés respectivement à une rangée de diodes électroluminescentes (8, 12).

4. Lampe (1) selon la revendication 1, 2 ou 3,
**caractérisée en ce que**
les flancs latéraux (7) sont fabriqués en matériau translucide, et la barrette transversale est fabriquée en un matériau qui rayonne de façon diffuse la lumière du fait de ses caractéristiques ou de sa structure superficielle.

5. Lampe selon la revendication 4,
**caractérisée en ce que**
le recouvrement et le conducteur optique (7) sont fabriqués d'une seule pièce en matière plastique par moulage par injection à deux composants.

6. Lampe (1) selon l'une des revendications précédentes,
**caractérisée en ce que**,
en ce qui concerne son efficacité lumineuse (11), le recouvrement (11) est constitué de telle sorte qu'il rayonne la lumière de façon diffuse.

7. Lampe (1) selon la revendication 6,
**caractérisée en ce que**
le recouvrement (11) est réalisé en polyméthacrylate de méthyle clair qui contient une proportion de matière perlée diffusante.

8. Lampe (1) selon la revendication 7,
**caractérisée en ce que**
la proportion de matière perlée diffusante est d'environ 20%.

9. Lampe (1) selon la revendication 6,
**caractérisée en ce que**
le recouvrement (11) présente sur la surface de rayonnement des impuretés optiquement actives qui peuvent être mises en place par gravure laser, par procédé d'impression ou par traitement mécanique.

10. Lampe (1) selon l'une des revendications précédentes 4 à 9,
**caractérisée en ce que**
la barrette transversale du recouvrement dépasse les deux flancs latéraux (7), et **en ce que** les saillies (15) ainsi formées sont inclinées par rapport à la barrette transversale.

11. Lampe (1) selon l'une des revendications précédentes,
**caractérisée en ce que**
la lampe (1) présente au moins deux sources de lumière qui sont formées d'une multiplicité de diodes électroluminescentes (8, 12) dont la lumière est rayonnée dans l'environnement par le biais de deux surfaces de rayonnement.

12. Lampe (1) selon la revendication 11,
**caractérisée en ce que**
les sources de lumière (8, 12) sont disposées sur un circuit imprimé (9) commun, la multiplicité de diodes électroluminescentes (8, 12) de la première source de lumière étant placées sur le côté supérieur du circuit imprimé (9), et la multiplicité de diodes électroluminescentes (8, 12) de la deuxième source de lumière étant placées sur le côté inférieur du circuit imprimé (9).

13. Lampe (1) selon la revendication 11 ou 12,
**caractérisée en ce que**
la première source de lumière (8, 12) rayonne sa lumière dans les conducteurs optiques du recouvrement (11).

14. Lampe (1) selon la revendication 11, 12 ou 13,
**caractérisée en ce que**
la deuxième source de lumière (8, 12) est formée d'au moins une rangée de plusieurs diodes électroluminescentes (8, 12) disposées les unes derrière les autres qui sont placées de façon centrée sur le circuit imprimé (9),
et **en ce que** les diodes électroluminescentes (8, 12) sont couvertes d'une optique lenticulaire qui rayonne la lumière qui la traverse dans une optique à grille (5).

15. Lampe (1) selon la revendication 14,
**caractérisée en ce que**
la rangée, au moins au nombre de un, de plusieurs diodes électroluminescentes (8, 12) de la deuxième source de lumière disposées les unes derrière les autres est entourée d'un réflecteur qui dirige sa lumière vers l'optique lenticulaire.

16. Lampe (1) selon l'une des revendications 11 à 15,
**caractérisée en ce que**
l'optique à grille (5) est réalisée en tant que grille en aluminium avec des réflecteurs latéraux et des lamelles transversales ou en tant que trame cellulaire en matière plastique.

17. Lampe (1) selon l'une des revendications 11 à 15,
**caractérisée en ce que**
la lampe (1) est réalisée en tant que lampe en applique ou en tant que lampe suspendue, la lumière de la première source de lumière (8, 12) servant à l'éclairage indirect, et la lumière de la deuxième source de lumière (8, 12) servant à l'éclairage direct.

18. Lampe (1) selon la revendication 17,
**caractérisée en ce que**
la première source de lumière (8, 12) peut être connectée ou bien peut être graduée séparément de la deuxième source de lumière (8, 12).
